# FASCICULE DE BREVET EUROPEEN

(11) **EP 2 258 828 B1**
(45) Date de publication et mention de la délivrance du brevet: **04.09.2013**
(21) Numéro de dépôt: 10290290.5
(22) Date de dépôt: 03.06.2010
(51) Int. Cl.: C12C 1/10

(54) **Dispositif de touraillage de grain amélioré**
Verbesserte Vorrichtung zum Darren von Getreide
Improved grain kilning device

(30) Priorité: 04.06.2009 FR 0902697
(43) Date de publication de la demande: 08.12.2010
(73) Titulaire: Malteurop Groupe, 51100 Reims (FR)
(72) Inventeur: Julien, Denis, 51360 Beaumont sur Vesle (FR)
(74) Mandataire: de Kernier, Gabriel

(56) Documents cités:
- EP-A2- 0 054 749
- CH-A- 352 982
- DE-A1- 2 208 836
- DE-A1- 3 147 671
- DE-C1- 3 232 977
- GB-A- 2 405 155
- US-A- 5 282 413

## Description

L'invention a trait au domaine technique du maltage et plus particulièrement à un dispositif de touraillage de grain, c'est-à-dire un dispositif pour faire sécher du grain germé.

Lors du maltage, on cherche à reproduire le développement naturel de la germination d'une céréale, afin que celle-ci développe certaines enzymes, telles que l'amylase. La céréale utilisée comprend généralement l'orge, le seigle, le sorgho, le blé ou l'épeautre.

Le maltage comprend le traitement de la céréale par une succession d'opérations, après quoi on obtient du malt.

Il existe de gros besoins en malt, de différentes propriétés et qualités selon le domaine d'utilisation. Le brassage par exemple nécessite un malt adapté et conditionné pour la fabrication de la bière.

Les principes généraux du maltage sont quasi ancestraux. On en trouve une synthèse dans l'ouvrage "Malterie et Brasserie", de Jean SUNIER, 2ème édition, imprimerie La Concorde, Lausanne, 1968, ou encore dans sa réédition plus récente sous le nouveau titre "La Fabrication de la Bière", Alliage éditeur, 26 septembre 2007, ISBN-13 No. 978-2921327602.

DE 3 232 977 C1 divulgue une installation pour malteries.

Aujourd'hui, le maltage est réalisé industriellement, dans des installations appelées malteries. Une malterie a pour objet la mise en oeuvre d'un procédé de production automatisé qui procure un excellent rendement en qualité et quantité, tout en réduisant les coûts d'investissement, de fonctionnement et de fabrication : emprise de terrain, génie civil de construction, besoins en énergie, notamment.

De façon générale, une telle installation comporte au moins les éléments suivants :
- un dispositif de trempage pour réaliser une opération de trempage du grain,
- au moins un germoir pour réaliser une opération de germination du grain trempé,
- au moins une touraille pour une opération de touraillage, et
- un système de transport du grain de l'un à l'autre de ces éléments.

Chacun de ces éléments est lié à des conditions opératoires strictes. En effet, les exigences de températures, de temps d'exposition et d'hygiène sont considérables. Des contraintes de coûts existent également. Le respect de ces exigences et contraintes nécessite une surveillance constante des différents éléments de la malterie, mais aussi une conception ingénieuse de la malterie afin d'optimiser la production de malt. Les malteries doivent en outre s'efforcer de réunir les conditions et besoins requis par l'industrie alimentaire, notamment pour assurer une production de malt qui réponde aux besoins de consommation.

La présente invention vient améliorer la situation.

Le dispositif de touraillage de grain proposé comprend, dans une enceinte à atmosphère contrôlée, un bac de touraillage présentant un fond à grille destiné à recevoir le grain, et des moyens de maintien du bac de touraillage à l'intérieur de ladite enceinte de manière que le fond à grille soit surélevé par rapport à un plancher de ladite enceinte, ce dispositif étant remarquable en ce que le plancher de cette enceinte est réalisé sous la forme d'une dalle-plancher, que lesdits moyens de maintien comprennent une pluralité de pieds de support en appui sur ladite dalle-plancher, et en ce que le fond à grille de la cuve de touraillage repose sur chacun de ladite pluralité de pieds de support.

Un tel dispositif permet de s'affranchir des contraintes de génie civil liées à la suspension du bac de touraillage par les parois de l'enceinte. Par exemple, un dispositif de ce type permet d'ériger des murs de moindre épaisseur par rapport aux dispositifs de l'état de la technique. Un tel dispositif offre également un accès plus facile au bac de touraillage pour les opérateurs humains.

On propose également une installation de touraillage de grain comprenant au moins deux dispositifs tels que proposés.

D'autres caractéristiques, de substitution ou complémentaires, sont énoncés ci-après :

Les moyens de maintien du bac de touraillage dans l'enceinte comprennent exclusivement des pieds de soutien.

Le bac de touraillage présente une allure généralement cylindrique et le fond à grille une allure généralement circulaire, tandis que l'enceinte présente une allure généralement cylindrique et la dalle-plancher une allure généralement rectangulaire ou carrée.

L'enceinte présente une paroi latérale bordant la dalle-plancher et s'élevant verticalement depuis cette dalle-plancher jusqu'au-dessus au moins du bac de touraillage.

Le dispositif comprend une plate-forme et des moyens de maintien de cette plate-forme dans l'enceinte de manière que cette plate-forme s'étende transversalement depuis la paroi latérale jusqu'au voisinage du bac de touraillage.

Le bac de touraillage comprend une paroi latérale bordant le fond à grille, et un ou plusieurs éléments d'étanchéité sont disposés entre la paroi latérale du bac de touraillage et l'extrémité proximale de la plate-forme.

Le fond à grille comprend une pluralité de dalles-grilles, chaque dalle-grille étant montée de manière flottante par rapport aux pieds dé soutien sous-jacents.

Certains au moins des pieds de soutien comprennent un corps télescopique.

L'enceinte comprend une paroi latérale réalisée sous la forme d'un mur de bâtiment ou d'une cloison.

La paroi latérale présente une ou plusieurs nervures de rigidification.

L'enceinte de chacun desdits dispositifs comprend une paroi latérale, l'enceinte est de base généralement carrée ou rectangulaire, et les enceintes respectives des dispositifs présentent un côté en commun.

D'autres caractéristiques et avantages de l'invention apparaîtront à l'examen de la description détaillée ci-après, et des dessins annexés, sur lesquels :
- la figure 1 montre un dispositif de touraillage de grains, vu en coupe,
- la figure 2 montre une installation de touraillage de grains comprenant le dispositif de la figure 1, vue de dessus, et
- la figure 3 montre l'installation de la figure 2, vue en coupe selon la ligne III-III.

Les dessins comprennent pour l'essentiel des éléments de caractères certains. Ils pourront donc non seulement servir à mieux faire comprendre la description, mais aussi contribuer à la définition de l'invention, le cas échéant.

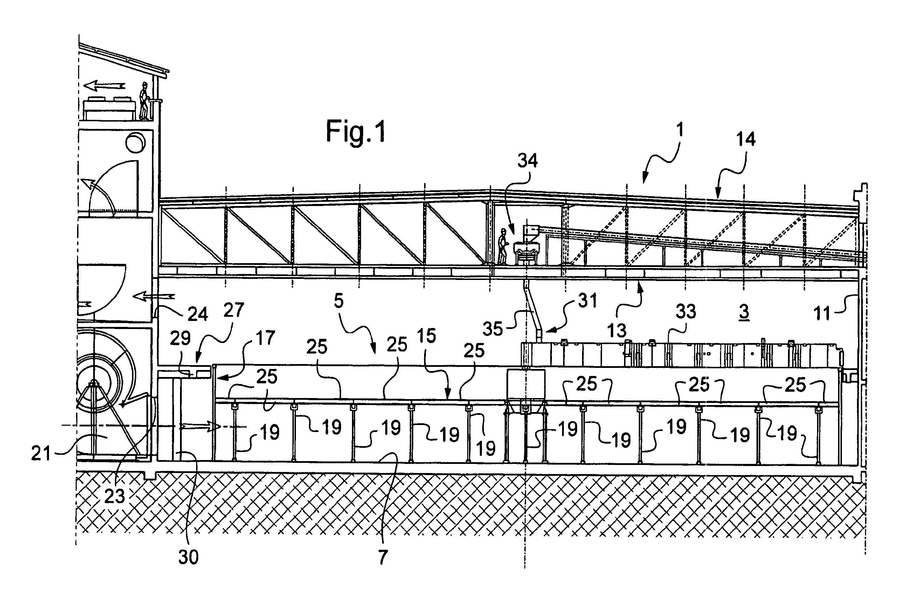

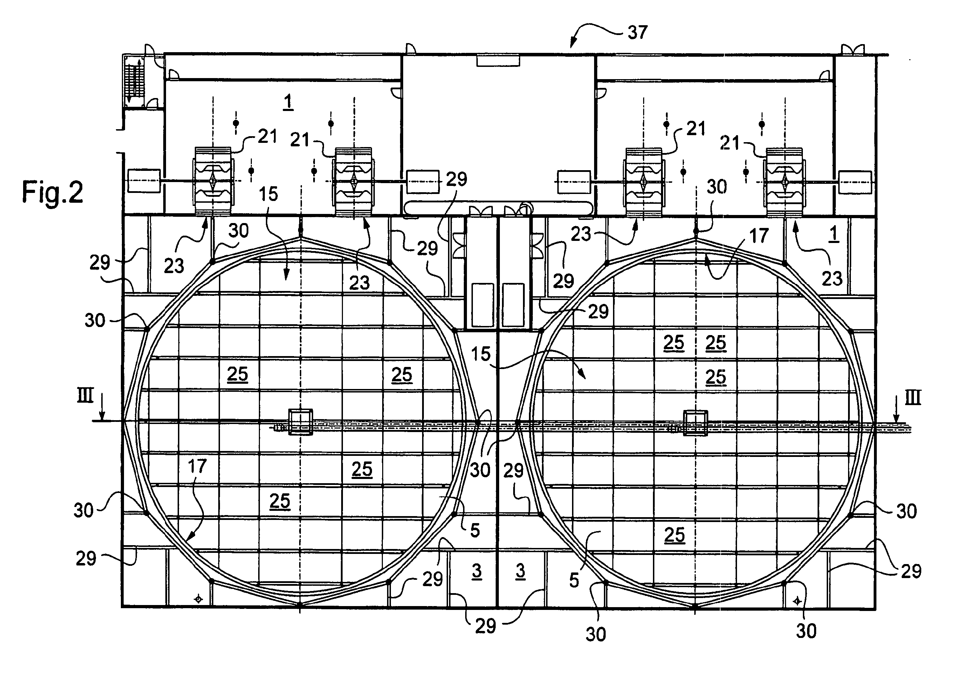

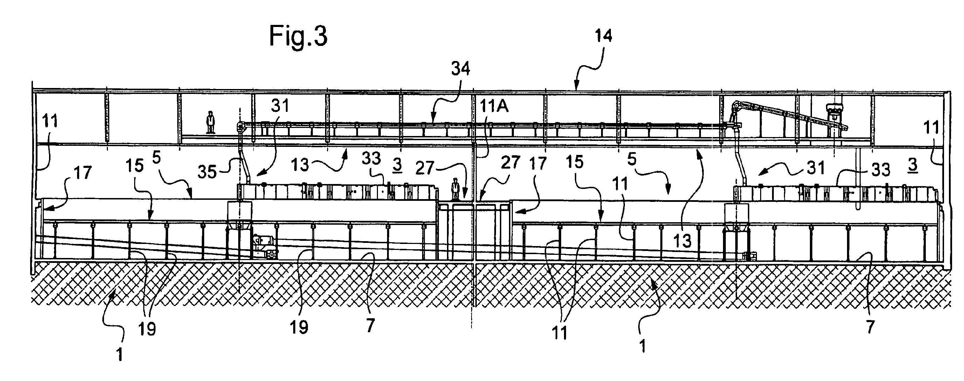

La figure 1 montre un dispositif de touraillage 1, aussi appelé "touraille" dans la technique. Le dispositif de touraillage 1 est également représenté sur les figures 2 et 3.

Il est fait référence à ces figures 1, 2 et 3.

Le dispositif de touraillage 1 est utilisé pour sécher, et éventuellement aromatiser, du malt, c'est-à-dire du grain germé, avec de l'air climatisé.

Le dispositif de touraillage 1 comprend une enceinte 3 dans laquelle est disposé un bac de touraillage 5 destiné à recevoir le grain germé.

L'atmosphère de l'enceinte 3 est contrôlée, en particulier en ce qui concerne le taux d'humidité et la température de l'air ambiant, ainsi que la pression régnant dans cette enceinte 3.

L'enceinte 3 prend typiquement la forme d'une partie de bâtiment, ici d'un local.

L'enceinte 3 est délimitée au sol par une dalle-plancher 7, en hauteur par un plafond 13, et latéralement par une paroi verticale 11 s'étendant au moins de la dalle-plancher 7 au plafond 13.

Le plafond 13 est ici réalisé sous la forme d'un faux-plafond disposé sous le plancher d'une structure d'étage, elle-même couverte d'une structure de toit 14. La paroi verticale 11 s'étend ici jusqu'à cette structure de toit 14.

La paroi latérale 11 est en grande partie réalisée sous la forme d'une ou plusieurs sections de murs et/ou de cloisons, érigées à l'intérieur d'un bâtiment ou délimitant le bâtiment en question.

La paroi latérale 11 s'étend suivant un contour rectangulaire, dont l'allure générale est proche de celle d'un carré.

Le bac de touraillage 5 comprend un fond à grille 15 et une paroi latérale 17 bordant le fond à grille 15.

Le bac de touraillage 5 présente une allure généralement cylindrique à section circulaire. Autrement dit, le fond à grille 15 présente une forme générale de cercle. Et la paroi latérale 17 s'étend suivant un contour généralement circulaire. Cette paroi latérale 17 du bac de touraillage peut être réalisée par l'assemblage bords à bords d'éléments de paroi sous forme de tôle métallique. La ou les matériaux utilisé pour la réalisation des pièces constitutives du bac de touraillage 5 sont choisis parmi les matériaux compatibles avec l'usage alimentaire.

Le dispositif de touraillage 1 comprend donc un bac de touraillage 5 rond logé dans un bâtiment ou une partie de bâtiment carrée, ce qui distingue ce dispositif des tourailles de l'état de la technique.

La paroi verticale 11 de l'enceinte 3 est proche de la paroi latérale 17 du bac de touraillage 15. Sur la figure 2 par exemple, la paroi latérale 17 du bac de touraillage 15 touche pratiquement deux côtés de la paroi verticale 11 de l'enceinte 3, tandis que la distance minimale entre la paroi latérale 17 du bac de touraillage 15 et les deux autres côtés de la paroi verticale 11 de l'enceinte 3 est inférieure à 1,60 mètre.

Étant donné que l'atmosphère à l'intérieur de l'enceinte 3 doit être contrôlée strictement, on s'efforce de réduire le volume de cette enceinte. La réduction de l'enceinte 3 conduit également à une diminution de l'encombrement au sol, ce qui présente également un avantage en termes de coûts de terrain.

Le fond à grille 15 est maintenu en une position surélevée par rapport à la dalle-plancher 7 par une pluralité de pieds de soutien 19. Le fond à grille 15 est donc soutenu et en appui sur la dalle-plancher 7. En cela le dispositif de touraillage 1 diffère des tourailles classiques, dans lesquelles le fond est suspendu, c'est-à-dire maintenu par un ensemble de poutrelles par les parois latérales délimitant l'enceinte. C'est pourquoi les tourailles classiques présentent des parois d'enceinte s'étendant verticalement et suivant un contour généralement circulaire.

Étant donné que la paroi verticale 11 ne supporte pas le bac de touraillage 5, dont le poids est tout-à-fait important une fois que le grain s'y trouve stocké, cette paroi verticale 11 peut être fabriquée plus fine (moins épaisse) que dans les dispositifs classiques. Pratiquement, les seuls efforts s'exerçant sur la paroi verticale 11 dans cette configuration sont liés à la pression régnant dans l'enceinte 3.

La paroi verticale 11 peut présenter une épaisseur de 30 centimètres, voire moins. En particulier, on peut prévoir des nervures de renfort (non représentées) sur la paroi verticale 11, par exemple de section carrée, qui permettent de réduire encore l'épaisseur de cette paroi verticale 11. Par exemple, l'épaisseur de cette paroi verticale peut alors être voisine de 12 centimètres.

À titre d'exemple, le fond à grille 15 est ici disposé à une hauteur voisine de 3 mètres de la dalle-plancher 7, tandis que l'extrémité supérieure de la paroi latérale 17 du bac de touraillage 15 se situe à une hauteur voisine de 4,60 mètres par rapport à cette dalle-plancher 7.

La position surélevée du fond à grille 15 par rapport à la dalle-plancher 7 permet de souffler de l'air climatisé sous ce fond à grille 15.

Pour ce faire, on utilise un ou plusieurs dispositifs de soufflerie 21.

Deux dispositifs de soufflerie 21 sont ici disposés hors de l'enceinte 3, au voisinage d'un même côté de cette enceinte 3. La paroi verticale 11 de l'enceinte 3 présente ici deux ouvertures basses 23, chacune d'elles étant disposée en regard de l'un des dispositifs de soufflerie 21.

Une ou plusieurs ouvertures hautes 24 sont ménagées dans la paroi verticale 11 pour l'évacuation de l'air soufflé. Ces ouvertures hautes sont ici disposées à l'aplomb des ouvertures basses 23.

Les pieds de soutien 19 sont régulièrement espacés les uns des autres sur l'ensemble de la surface au sol du bac de touraillage 5. Cet arrangement offre un soutien équilibré et convenablement réparti pour le fond à grille 15.

Le fond à grille 15 est ici réalisé sous la forme d'une pluralité de panneaux à grille 25 disposés de manière adjacente les uns aux autres, bord à bord, de manière à couvrir l'espace délimité par la paroi latérale 17 du bac de touraillage 5.

La plupart des panneaux à grille 25 présentent une allure généralement rectangulaire. Les panneaux radialement excentrés du fond à grille 15, c'est-à-dire les plus proches de la paroi latérale 17 du bac de touraillage 5, sont découpés pour conférer au fond à grille 15 une allure circulaire.

Chaque panneau à grille 25 de forme rectangulaire est maintenu à ses quatre coins par un pied de soutien 19. Et la plupart de ces pieds de soutien 19 maintiennent un coin appartenant à quatre panneaux à grille 25 mutuellement adjacents.

Chaque panneau à grille 25 est monté flottant par rapport aux pieds de soutien 19 qui le maintiennent.

Les bords longitudinaux de chacun des panneaux à grille 25 sont recourbés, de manière à être orientés vers la dalle-plancher 7 une fois montés. Chacun de ces bords longitudinaux est solidaire d'un segment tubulaire, qui peut s'étendre sur pratiquement l'ensemble de la longueur du bord longitudinal respectif. Le segment tubulaire est reçu dans une terminaison en U des pied de soutien 19, ce qui permet un certain débattement angulaire entre le segment tubulaire et le pied de soutien 19 tout en limitant toute translation transversale du segment tubulaire par rapport à ses pieds de soutien 19 respectifs.

Chacun des pieds de soutien 19 présente un corps tubulaire et télescopique. La hauteur de chacun des pieds de soutien 19 peut être adaptée de manière à conserver un fond à grille 15 généralement plat, même lorsque la dalle-plancher 17 présente des différences niveaux (défaut de planéité).

Lorsque la hauteur d'un pied de soutien 19 a été adaptée, grâce à sa structure télescopique, les tubes formant cette structure sont fixement maintenus les uns par rapport aux autres, par exemple par soudage.

Chaque panneau 25 présente une grille très fine sur laquelle les grains germés sont destinés à reposer, et au travers de laquelle l'air climatisé peut circuler.

Chacun de ces panneaux peut par exemple comprendre une pluralité de barres supérieures et une pluralité de barres inférieures croisant ces barres supérieures. Les barres supérieures peuvent être fixées aux barres inférieures par un point de soudure ou un cordon de soudure. Les barres supérieures peuvent être disposées dans un plan sensiblement horizontal, parallèlement les unes aux autres. Les barres supérieures peuvent présenter une section transversale en forme de triangle isocèle, par exemple équilatéral. Le sommet du triangle peut alors être dirigé vers le bas, c'est-à-dire vers les barres inférieures. Chaque barre supérieure peut comprendre une surface supérieure correspondant à la base du triangle et deux surfaces latérales inférieures se rejoignant en direction de la barre inférieure. La longueur de la base du triangle peut être choisie notamment en fonction de l'espacement entre deux barres supérieures adjacentes de telle sorte que le taux d'ouverture d'une grille soit supérieur à 30 % préférablement à 40 %.

Le dispositif de touraillage 1 comprend une plate-forme opérateur 27, laquelle s'étend parallèlement à la dalle-plancher 7, au niveau de l'extrémité supérieure de la paroi de bordure 17 du bac de touraillage 5, ou légèrement en dessous de cette extrémité.

La plate-forme opérateur 27 s'étend de la paroi verticale 11 de l'enceinte 3 jusqu'au voisinage de la paroi latérale 17 du bac de touraillage, extérieurement à ce bac 5. La plate-forme opérateur 27 s'étend sur l'ensemble de la périphérie du bac de touraillage 5, permettant ainsi large accès au bac 5. Cette grande facilité d'accès au bac de touraillage 5 distingue le dispositif 1 des dispositifs de l'état de la technique, lesquels dispositifs présentent une zone de touraillage difficile d'accès en raison des poutrelles utilisées pour la suspension du bac de touraillage au parois d'enceintes. Autrement dit, les opérateurs peuvent se déplacer sans entrave tout autour du bac de touraillage 5 du dispositif 1, leurs mouvements n'étant en rien gênés par la structure de soutien du bac de touraillage 5, laquelle structure de soutien se situe sous ce bac 5.

La plate-forme opérateur 27 peut être maintenue par la paroi verticale 11 de l'enceinte 3. En complément ou en remplacement, la plate-forme opérateur 27 pourrait être supportées par des poteaux 30, par exemple en ciment, en appui sur la dalle-plancher 7. Ici, des poteaux 30 sont disposés à l'intersection de certaines au moins des nervures 29.

La plate-forme opérateur 27 peut présenter des nervures 29 pour améliorer sa rigidité, lesquelles nervures 29 sont réalisées sur une face inférieure de cette plate-forme 27.

Ici, la plate-forme opérateur 27, y compris les nervures 29, sont réalisées en ciment ou en béton. En remplacement, cette plate-forme opérateur 27 pourrait être réalisée en tôle métallique.

En option, des éléments d'étanchéité, par exemple sous la forme de bavettes en matière caoutchouc, peuvent être disposés entre l'extrémité de la plate-forme opérateur 27 proche de la paroi de la paroi latérale 17 du bac de touraillage 5 et cette paroi latérale 17 de manière à empêcher que du grain ne passe de l'extérieur du bac de touraillage 5 sous ce dernier. Ces bavettes permettent également que l'air soufflé passe dans une plus grande proportion à travers le fond à grille 15, puisque cet air ne peut circuler entre la plate-forme 27 et la paroi latérale 17 du bac de touraillage 5, seule partie laissée libre par la plate-forme 27 et ce bac de touraillage.

Le dispositif de touraillage 5 comprend un dispositif d'alimentation et de retournement 31 pour le grain destiné au bac de touraillage 5. Ce dispositif d'alimentation et de retournement 31 comprend un ou plusieurs bras mobiles en rotation 33, sur lesquels bras sont montés un ou plusieurs organes de retournement de grain (non représentés), par exemple intégrant une ou plusieurs vis-sans-fin, et un ou plusieurs organes d'alimentation en grain (non représentés).

Chaque bras mobile 33 s'étend suivant un rayon du bac de touraillage 5, du centre de ce bac de touraillage 5 au voisinage de sa paroi latérale 17. L'axe de rotation de chaque bras mobile 33 coïncide avec le centre du bac de touraillage 5.

Le dispositif d'alimentation et de retournement 31 est relié à un dispositif de transport de grain, réalisé ici sous la forme d'un convoyeur à bande 34, par l'intermédiaire d'un conduit d'acheminement de grain 35. Le convoyeur à bande 34 est ici supporté par la structure d'étage, entre le plafond 13 et le toit 14.

Comme le montrent les figures 2 et 3, un ou plusieurs dispositifs de touraillage 5 peuvent être intégrés dans une installation de touraillage 37, c'est-à-dire en une unité fonctionnelle de la malterie dédiée à cette opération.

L'installation de touraillage 37 comprend ici deux dispositifs 1, c'est-à-dire deux bacs de touraillage 5, chacun de ces bacs de touraillage 5 étant entouré d'une paroi verticale 11.

Les parois latérales 11 correspondant à chacun des dispositifs de touraillage 1 présentent une section de paroi verticale 11 en commun.

Un côté 11a de la paroi verticale 11 correspondant à l'un des bacs de touraillage 5 forme un côté de la paroi verticale 11 correspondant à l'autre de ces bacs de touraillage 5. Cette mise en commun d'une section de paroi verticale 11 entraîne une réduction significative des coûts de génie civil pour la malterie. Cette réduction des coûts n'est pas possible avec les dispositifs de touraillage classiques, dans lesquels la paroi verticale de l'enceinte suit un contour généralement circulaire. On minimise également les déperditions de chaleur, puisque de part et d'autre de la section commune les enceintes 3 présente une température ambiante pratiquement égale.

La réduction des coûts de génie civil pour l'installation de touraillage 37 n'est pas seulement liée à la mise en commun d'une partie de la paroi verticale 11 des enceintes 3. De manière générale, il est plus aisé et plus économique de réaliser un bâtiment, une salle, une pièce, un local etc. assis suivant un contour carré ou rectangulaire que circulaire.

Plus généralement, une installation de touraillage 37 comprenant plusieurs dispositifs de touraillage 5 présentera la particularité que la portion de la paroi latérale 11 qui sépare deux bacs de touraillage 5 l'un de l'autre est commune aux deux dispositifs 1 correspondants.

Le dispositif de touraillage 1 présente la particularité d'un bac de touraillage 5 supporté par la dalle-plancher 7 au moyen de pieds de soutien 19, à la différence des dispositifs classiques, dans lesquels ce bac de touraillage 5 est supporté par la paroi verticale de l'enceinte.

On a vu qu'il en découlait de nombreux avantages, dont une réduction des coûts de génie civil liés à la fabrication de cette paroi latérale 11. Pour partie, cette réduction des coûts résulte de la possibilité de réaliser une enceinte suivant un contour rectangulaire, voire carré, et non plus circulaire. Ceci conduit à loger un bac de touraillage d'allure circulaire dans une enceinte de base carrée, ce qui va à l'encontre des habitudes prises dans la technique.

En pratique, la paroi verticale 11 du dispositif 1 sert quasi exclusivement au guidage de l'air climatisé. On remarquera également que l'agencement particulier du dispositif de touraillage 1 lui permet d'être insensible à tout mouvement de cette paroi latérale 11.

L'invention n'est nullement limitée aux modes de réalisation décrits plus haut, à titre d'exemple uniquement. De nombreuses modifications peuvent ainsi être apportées à ces modes de réalisation, dans le cadre de l'invention.

En particulier, lorsqu'il a été fait référence à la paroi latérale 11 de l'enceinte 3, il faut comprendre que cette paroi 11 peut être réalisée par portions, qui peuvent ou non correspondre aux côtés de l'enceinte 3. Et ces portions peuvent présenter des natures différentes, en termes de génie civil notamment. Par exemple, une portion de la paroi verticale 11 peut se présenter sous la forme d'un mur de bâtiment tandis qu'une portion différente peut être réalisée sous la forme d'une simple cloison. Toujours à titre d'exemple, une installation à deux tourailles peut être réalisée dans un bâtiment de base rectangulaire dans lequel on érige une cloison transversale pour diviser ce bâtiment en deux enceintes 3.

Dans une installation de touraillage à plusieurs tourailles, les dalles-planchers 7 respectives peuvent être coulées en une même dalle-plancher.

Le dispositif 1 offre un intérêt particulier en ce qu'il permet la réalisation d'un enceinte de base carrée. Cependant, il faut surtout comprendre que le dispositif 1 permet de dissocier la forme de la base de l'enceinte 3 de celle du bac de touraillage 5. Dès lors, de nombreuses combinaisons peuvent être envisagées entre ces formes, y compris une enceinte 3 de base circulaire avec un bac de touraillage circulaire ou rectangulaire.

Le terme d'enceinte a été utilisé pour décrire un espace pratiquement clos, dans lequel l'atmosphère ambiante peut être contrôlée. En pratique, cette enceinte peut revêtir des réalisation très différentes. Par exemple, l'enceinte 3 peut comprendre une salle située dans un bâtiment, un bâtiment lui-même, un local, une pièce ou analogue.

## Revendications

1. Dispositif de touraillage de grain (1) du type comprenant, dans une enceinte à atmosphère contrôlée (3), un bac de touraillage (5) présentant un fond à grille (15) destiné à recevoir le grain et des moyens de maintien du bac de touraillage à l'intérieur de ladite enceinte de manière que le fond à grille soit surélevé par rapport à un plancher de ladite enceinte, **caractérisé en ce que** le plancher de cette enceinte est réalisé sous la forme d'une dalle-plancher (7), **en ce que** lesdits moyens de maintien comprennent une pluralité de pieds de soutien (19) en appui sur ladite dalle-plancher, et **en ce que** le fond à grille (15) du bac de touraillage (5) repose sur chacun de ladite pluralité de pieds de soutien (19).

2. Dispositif selon la revendication 1, dans lequel les moyens de maintien du bac de touraillage dans l'enceinte comprennent exclusivement des pieds de soutien (19).

3. Dispositif selon l'une des revendications 1 et 2, dans lequel le bac de touraillage (5) présente une allure généralement cylindrique et le fond à grille (15) une allure généralement circulaire, tandis que l'enceinte (3) présente une allure généralement cylindrique et la dalle-plancher (7) une allure généralement rectangulaire ou carrée.

4. Dispositif selon l'une des revendications précédentes, dans lequel l'enceinte présente une paroi latérale (11) bordant la dalle-plancher (7) et s'élevant verticalement depuis cette dalle-plancher (7) jusqu'au-dessus au moins du bac de touraillage (5).

5. Dispositif selon la revendication 4 comprenant une plate-forme (27) et des moyens de maintien de cette plate-forme dans l'enceinte de manière que cette plate-forme s'étende transversalement depuis la paroi latérale jusqu'au voisinage du bac de touraillage (5).

6. Dispositif selon la revendication 5, dans lequel le bac de touraillage (5) comprend une paroi latérale (17) bordant le fond à grille (15), et dans lequel un ou plusieurs éléments d'étanchéité sont disposés entre la paroi latérale du bac de touraillage et l'extrémité proximale de la plate-forme (27).

7. Dispositif selon l'une des revendications précédentes, dans lequel le fond à grille (15) comprend une pluralité de dalles-grilles (25), chaque dalle-grille étant montée de manière flottante par rapport aux pieds de soutien (19) sousjacents.

8. Dispositif selon l'une des revendications précédentes, dans lequel certains au moins des pieds de soutien (19) comprennent un corps télescopique.

9. Dispositif selon l'une des revendications précédentes, dans lequel l'enceinte (3) comprend une paroi latérale (11) réalisée sous la forme d'un mur de bâtiment ou d'une cloison.

10. Dispositif selon l'une des revendications précédentes, dans lequel la paroi latérale (3) présente une ou plusieurs nervures de rigidification.

11. Installation de touraillage (37) de grain comprenant deux dispositifs selon l'une des revendications précédentes.

12. Installation selon la revendication 11, dans laquelle l'enceinte (3) de chacun desdits dispositifs comprend une paroi latérale (11), dans laquelle l'enceinte est de base généralement carrée ou rectangulaire, et dans laquelle les enceintes (3) respectives des dispositifs (1) présentent un côté en commun (11a).

## Patentansprüche

1. Getreidedarre-Vorrichtung (1) derjenigen Art, die in einer Umfassung (3) mit kontrollierter Atmosphäre einen Darrbottich (5) mit einem Gitterboden (15) zur Aufnahme des Getreides und Einrichtungen aufweist, um den Darrbottich im Inneren der Umfassung so zu haltern, dass der Gitterboden über einem Boden der genannten Umfassung angehoben wird, **dadurch gekennzeichnet, dass** der Boden der Umfassung als Bodenplatte (7) ausgeführt ist, dass die Halterungseinrichtungen eine Vielzahl von tragenden Füßen (19) aufweisen, die sich auf der Bodenplatte stützen, und dass der Gitterboden (15) des Darrbottichs (5) auf jedem der Vielzahl von tragenden Füßen (19) ruht.

2. Vorrichtung nach Anspruch 1, dass die Einrichtungen, die den Darrbottich in der Umfassung haltern, ausschließlich tragende Füße (19) sind.

3. Vorrichtung nach einem der Ansprüche 1 und 2, bei der der Darrbottich (5) eine allgemein zylindrische und der Gitterboden (15) eine allgemein kreisförmige Erscheinung aufweisen, während der umschlossene Raum (3) eine allgemein zylindrische und die Bodenplatte (7) eine allgemein rechteckige oder quadratische Erscheinung aufweisen.

4. Vorrichtung nach einem der vorgehenden Ansprüche, bei der die Umfassung eine Seitenwand (11) aufweist, die an die Bodenplatte (7) angrenzt und sich von dieser vertikal mindestens bis über den Darrbottich (5) erhebt.

5. Vorrichtung nach Anspruch 4 mit einer Plattform (27) und Einrichtungen, die diese Plattform in der Umfassung so haltern, dass sie sich von der Seitenwand quer bis nahe an den Darrbottich (5) erstreckt.

6. Vorrichtung nach Anspruch 5, bei der der Darrbottich (5) eine Seitenwand (17) aufweist, die an den Gitterboden (15) angrenzt, und bei der zwischen der Seitenwand des Darrbottichs und dem nächstliegenden Außenrand der Plattform ein oder mehr Abdichtelemente angeordnet sind.

7. Vorrichtung nach einem der vorgehenden Ansprüche, bei der der Gitterboden (15) eine Vielzahl von Gitterplatten (25) aufweist, die bezüglich der darunter befindlichen tragenden Füße (19) jeweils schwimmend gelagert sind.

8. Vorrichtung nach einem der vorgehenden Ansprüche, bei der mindestens einige der tragenden Füße (19) teleskopartig ausgeführt sind.

9. Vorrichtung nach einem der vorgehenden Ansprüche, bei der die Umfassung (3) eine Seitenwand (11) aufweist, die als Gebäudemauer oder Trennwand ausgeführt ist.

10. Vorrichtung nach einem der vorgehenden Ansprüche, bei der die Seitenwand (3) eine oder mehr Verstärkungsrippen aufweist.

11. Getreidedarranlage (37) mit zwei Vorrichtungen nach einem der vorgehenden Ansprüche.

12. Getreidedarranlage nach Anspruch 11, bei der die Umfassung (3) jeder der Vorrichtungen eine Seitenwand (11) aufweist, die Grundfläche der Umfassung allgemein quadratisch oder rechteckig ist und die Umfassungen (3) der Vorrichtungen (1) eine gemeinsame Seite (11a) aufweisen.

## Claims

1. Grain kilning device (1) of the type comprising, in a controlled atmosphere enclosure (3), a kilning tray (5), having a grid bottom (15) intended to receive the grain and means for holding the kilning tray within the said enclosure (3) in such a way that the grid bottom is raised in relation to a floor of the said enclosure, **characterised in that** the floor of this enclosure is constructed as a slab floor (7), **in that** the said means for holding comprise a plurality of support legs (19) resting on the said slab floor and **in that** the grid bottom (15) of the kilning tray (5) rests on each of the said plurality of support legs (19).

2. Device according to claim 1, in which the means for holding the kilning tray in the enclosure comprises exclusively support legs (19).

3. Device according to one of claims 1 and 2, in which the kilning tray (5) is generally cylindrical in shape, and the grid bottom (15) is generally circular in shape, while the enclosure (3) is generally cylindrical in shape and the slab floor (7) is generally rectangular or square in shape.

4. Device according to any of the preceding claims, in which the enclosure has a side wall (11) bordering the slab floor (7) and rising vertically from this slab floor (7) up to at least above the kilning tray (5).

5. Device according to claim 4, comprising a platform (27) and means for holding this platform in the enclosure in such a way that this platform extends transversely from the side wall up to the vicinity of the kilning tray (5).

6. Device according to claim 5, in which the kilning tray (5) comprises a side wall (17) bordering the grid bottom (15) and in which one or more sealing elements are arranged between the side wall of the kilning tray and the proximal end of the platform (27).

7. Device according to any of the preceding claims, in which the grid bottom (15) comprises a plurality of grid slabs (25), each grid slab being mounted in a floating manner in relation to the underlying support legs (19).

8. Device according to any of the preceding claims, in which at least some of the support legs (19) comprise a telescopic body.

9. Device according to any of the preceding claims, in which the enclosure (3) comprises a side wall (11) constructed in the form of a building wall or a partition wall.

10. Device according to any of the preceding claims, in which the side wall (3) has one or more stiffening ribs.

11. Grain kilning installation (37) comprising two devices according to any of the preceding claims.

12. Installation according to claim 11, in which the enclosure (3) of each of the said devices comprises a side wall (11), in which the enclosure has a generally square or rectangular base, and in which the respective enclosures (3) of the devices (1) have a common side (11 a).
